# FASCICULE DE BREVET EUROPEEN

(11) **EP 3 573 569 B1**
(45) Date de publication et mention de la délivrance du brevet: **09.12.2020**
(21) Numéro de dépôt: 18702821.2
(22) Date de dépôt: 23.01.2018
(51) Int. Cl.: A61C 8/00, A61C 13/265

(54) **PIECE INTERMEDIAIRE DE FIXATION**
ZWISCHENBEFESTIGUNGSTEIL
INTERMEDIATE ATTACHMENT PART

(30) Priorité: 26.01.2017 FR 1750658
(43) Date de publication de la demande: 04.12.2019
(73) Titulaire: ANTHOGYR, 74700 Sallanches (FR)
(72) Inventeur: RICHARD, Hervé, 73590 Notre Dame de Bellecombe (FR)
(74) Mandataire: Cabinet Poncet
(86) Numéro de dépôt international: PCT/IB2018/050401
(87) Numéro de publication internationale: WO 2018/138633

(56) Documents cités:
- EP-A1- 2 127 612
- WO-A1-2013/125924
- JP-A- H05 168 651
- US-A1- 2013 108 987
- US-A1- 2016 151 126
- US-B2- 8 033 826

## Description

### DOMAINE TECHNIQUE DE L'INVENTION

La présente invention concerne le domaine de la restauration prothétique dentaire, et concerne plus particulièrement une pièce intermédiaire de fixation pour la fixation d'un composant prothétique dentaire transvissé ou d'un outil dentaire sur un implant dentaire ou sur un analogue d'implant dentaire.

Les composants prothétiques dentaires à manipuler lors d'une restauration prothétique dentaire ont des tailles très réduites qui induisent des risques élevés de perte ou d'avalement par le patient.

Afin de réduire ces risques, on a imaginé de solidariser de façon au moins précaire le ou les composants prothétiques dentaires sur un implant dentaire, par exemple au moyen de la pièce intermédiaire de fixation décrite dans le document US 8,033,826 B2.

Cette pièce intermédiaire de fixation, sensiblement tubulaire à premier passage traversant, s'étend selon un premier axe longitudinal entre une première extrémité et une deuxième extrémité. La première extrémité comporte un premier ensemble d'ailettes longitudinales, chacune de ces ailettes longitudinales comportant une partie distale libre radialement et déplaçable de façon élastique par rapport au premier axe longitudinal pour s'engager par encliquetage dans le composant prothétique dentaire. La deuxième extrémité comporte un deuxième ensemble d'ailettes longitudinales, chacune de ces ailettes longitudinales comportant une partie distale libre radialement et déplaçable de façon élastique par rapport au premier axe longitudinal pour s'engager par encliquetage dans l'implant dentaire.

Cette pièce intermédiaire de fixation procure une fixation précaire par encliquetage entre l'implant dentaire et le composant dentaire, le temps que le praticien rapporte une vis de fixation destinée à mieux immobiliser le composant dentaire sur l'implant dentaire.

S'agissant d'encliquetages, il est nécessaire que les ailettes présentent, selon la direction axiale d'allongement de la pièce intermédiaire de fixation, une longueur suffisante pour faciliter leur fléchissement afin de déplacer radialement leurs extrémités libres (ou parties distales) les unes vers les autres. Si les ailettes présentent une longueur trop réduite, le déplacement radial des extrémités libres des ailettes les unes vers les autres nécessite un effort axial trop important rendant l'encliquetage inconfortable, voire impossible. Il en résulte que, pour fonctionner correctement, cette pièce intermédiaire de fixation présente nécessairement un encombrement axial important.

Un tel encombrement axial est une contrainte, qui limite les conceptions structurelles de l'implant dentaire et du composant prothétique dentaire.

Le document US 2016/0151126 A1 décrit une pièce intermédiaire de fixation similaire à celle du document US 8,033,826 B2.

Le document EP 2 127 612 A1 décrit également un ensemble avec un implant dentaire avec une pièce de connexion intermédiaire.

Le document JP H05-168651 A décrit quant à lui une pièce intermédiaire de fixation se présentant sous la forme d'un mors de serrage.

### EXPOSE DE L'INVENTION

Un problème proposé par la présente invention est de procurer une pièce intermédiaire de fixation qui à la fois facilite les manipulations des praticiens (prothésiste et chirurgien-dentiste) lors d'une restauration prothétique dentaire, facilite la manipulation de l'implant dentaire, et limite les risques de perte ou d'avalement de composants prothétiques dentaires ou d'outils dentaires.

Simultanément, la présente invention vise à réduire les contraintes dans les conceptions structurelles de l'implant dentaire et du composant prothétique dentaire.

Pour atteindre ces objets ainsi que d'autres, l'invention propose un ensemble comprenant une pièce intermédiaire de fixation sensiblement tubulaire à premier passage traversant pour la fixation d'un composant prothétique dentaire transvissé ou d'un outil dentaire sur un implant dentaire, ladite pièce intermédiaire de fixation s'étendant selon un premier axe longitudinal entre une première extrémité et une deuxième extrémité, et dans laquelle :
- la première extrémité comporte un premier ensemble d'ailettes longitudinales, chaque ailette longitudinale comportant une partie distale libre radialement déplaçable de façon élastique pour s'engager par encliquetage dans le composant prothétique dentaire ou dans l'outil dentaire,
- l'ensemble comprend un implant dentaire s'étendant selon un deuxième axe longitudinal entre une extrémité proximale et une extrémité distale, à logement intérieur de connexion s'étendant depuis l'extrémité distale et en direction de l'extrémité proximale et comprenant un tronçon proximal fileté intérieurement,
- l'ensemble comprend une vis de fixation comportant une tête de vis depuis laquelle s'étend une tige de vis munie d'un tronçon fileté destiné à être reçu par vissage dans le tronçon proximal fileté intérieurement de l'implant dentaire,
caractérisé en ce que :
- la deuxième extrémité comporte un deuxième ensemble d'ailettes longitudinales, chaque ailette longitudinale comportant une partie distale libre radialement déplaçable de façon élastique pour s'engager par encliquetage dans l'implant dentaire,
- les premier et deuxième ensembles d'ailettes longitudinales sont définis par une pluralité de fentes longitudinales s'étendant sur une partie seulement de la longueur de la pièce intermédiaire de fixation et prenant naissance de façon alternée depuis la première extrémité et depuis la deuxième extrémité, lesdites fentes s'étendant selon un même tronçon axial intermédiaire de la pièce intermédiaire de fixation de sorte que les ailettes longitudinales des premier et deuxième ensembles présentent un recouvrement selon leur longueur,
- le logement intérieur de connexion comporte une première gorge, ménagée entre le tronçon proximal fileté intérieurement et l'extrémité distale de l'implant dentaire, et destinée à recevoir par encliquetage les parties distales libres des ailettes du deuxième ensemble d'ailettes longitudinales.

Les fentes définissant les premier et deuxième ensembles d'ailettes longitudinales, s'étendant toutes selon un même tronçon axial intermédiaire de la pièce intermédiaire de fixation, permettent de limiter efficacement l'encombrement axial de la pièce de fixation tout en procurant des encliquetages aisés. En effet, les ailettes longitudinales des premier et deuxième ensembles présentent un recouvrement selon leur longueur. Ce recouvrement permet une longueur suffisante des ailettes longitudinales pour des encliquetages aisés, tout en procurant un encombrement axial réduit de la pièce intermédiaire de fixation. Cet encombrement axial réduit facilite les manipulations des praticiens et réduit les contraintes dans les conceptions structurelles de l'implant dentaire et du composant prothétique dentaire.

Dans un premier mode de réalisation, on peut prévoir que l'encliquetage des parties distales libres des ailettes du deuxième ensemble d'ailettes longitudinales est irréversible. Les risques de séparation intempestive de la pièce intermédiaire de fixation et de l'implant dentaire sont ainsi réduits.

Dans un deuxième mode de réalisation, on peut prévoir que l'encliquetage des parties distales libres des ailettes du deuxième ensemble d'ailettes longitudinales est réversible. La pièce intermédiaire de fixation peut alors être extraite de l'implant dentaire en cas de besoin.

Avantageusement, le tronçon proximal fileté intérieurement de l'implant dentaire peut être constitué par un insert fileté intérieurement, rapporté et indexé en rotation dans le logement intérieur de connexion. L'implant dentaire peut ainsi comporter un logement intérieur de connexion à forme très simple et rapide à usiner, ce qui limite les coûts de fabrication de l'implant dentaire. Par ailleurs, cela limite les risques d'un filetage interne induisant des risques d'amorce de fissure dans l'implant dentaire. Ceci s'avère particulièrement utile dans le cas d'un implant dentaire en céramique dont la dureté rend l'usinage difficile et qui est sensible aux risques d'amorce de fissure.

Avantageusement, la deuxième extrémité de la pièce intermédiaire de fixation et l'insert fileté intérieurement peuvent être conformés de façon que, lorsque l'insert fileté intérieurement est en appui axialement contre la deuxième extrémité de la pièce intermédiaire de fixation, cet appui s'oppose à un retrait de la deuxième extrémité de la pièce intermédiaire de fixation hors de la première gorge. On rend ainsi inséparables la pièce intermédiaire de fixation et l'implant dentaire de façon simple à l'aide de la vis de fixation.

De préférence, un déplacement relatif en translation de l'insert fileté intérieurement vers l'extrémité distale de l'implant dentaire selon le deuxième axe longitudinal peut provoquer une expansion radiale de la deuxième extrémité de la pièce intermédiaire de fixation. On peut ainsi augmenter la retenue de la pièce intermédiaire de fixation dans l'implant dentaire au-delà de la retenue procurée par l'encliquetage dans le cas où ce dernier ne fait pénétrer que partiellement les parties distales libres des ailettes longitudinales du deuxième ensemble d'ailettes longitudinales dans la première gorge.

Avantageusement, on peut prévoir que :
- l'ensemble comporte un composant prothétique dentaire comprenant un deuxième passage traversant constitué par des premier et deuxième tronçons de passage successifs, ledit premier tronçon de passage s'étendant depuis une extrémité proximale du composant prothétique dentaire selon un troisième axe longitudinal, et ledit deuxième tronçon de passage prolongeant le premier tronçon de passage,
- le premier tronçon de passage comporte une deuxième gorge destinée à recevoir par encliquetage les parties distales libres des ailettes du premier ensemble d'ailettes longitudinales.

L'encombrement axial de la pièce intermédiaire de fixation étant réduit, la longueur du premier tronçon de passage peut être réduite et peut ainsi laisser le concepteur du composant prothétique dentaire plus libre dans la définition structurelle du deuxième tronçon de passage, notamment dans son orientation.

Avantageusement, on peut prévoir que la première extrémité de la pièce intermédiaire de fixation et la tête de la vis de fixation sont conformées de façon que, lorsque la tête de la vis de fixation est en appui axialement contre la première extrémité de la pièce intermédiaire de fixation, cet appui s'oppose à un retrait de la première extrémité de la pièce intermédiaire de fixation hors de la deuxième gorge.

Il n'y a ainsi pas besoin de prévoir de siège de vis dans le composant prothétique dentaire, ce siège étant procuré par la première extrémité de la pièce intermédiaire de fixation. On réduit ainsi encore la longueur nécessaire pour le premier tronçon de passage.

De préférence, on peut prévoir qu'un déplacement relatif en translation de la tête de vis de fixation vers l'extrémité proximale de l'implant dentaire selon le deuxième axe longitudinal provoque une expansion radiale de la première extrémité de la pièce intermédiaire de fixation. On peut ainsi augmenter la retenue de la pièce intermédiaire de fixation dans le composant prothétique dentaire au-delà de la retenue procurée par l'encliquetage dans le cas où ce dernier ne fait pénétrer que partiellement les parties distales libres des ailettes longitudinales du premier ensemble d'ailettes longitudinales dans la deuxième gorge.

Avantageusement, la deuxième gorge et/ou la première extrémité de la pièce intermédiaire de fixation comportent des surfaces de contact respectives conformées de façon que l'expansion radiale de la première extrémité de la pièce intermédiaire de fixation induise selon le deuxième axe longitudinal un pressage axial de l'extrémité proximale du composant prothétique dentaire vers l'extrémité distale de l'implant dentaire. Un tel pressage axial permet de limiter efficacement les risques que s'insèrent et se développent des bactéries aux interfaces entre le composant prothétique dentaire et l'implant dentaire (et les éventuels composants intermédiaires).

De préférence, on peut prévoir que :
- le premier tronçon de passage du composant prothétique dentaire comporte des dimensions transversales permettant la réception de la première extrémité de la pièce intermédiaire de fixation et de la tête de vis par pénétration axiale selon le troisième axe longitudinal depuis l'extrémité proximale du composant prothétique dentaire,
- le deuxième tronçon de passage du composant prothétique dentaire comporte des dimensions transversales inférieures à celles du premier tronçon de passage, mais suffisantes pour le passage d'un outil permettant d'entraîner en rotation la vis de fixation selon le troisième axe longitudinal.

La vis de fixation peut ainsi être vissée partiellement par le praticien avant que ce dernier rapporte le composant prothétique dentaire par encliquetage sur l'implant dentaire et visse la vis de fixation de façon complète pour mieux immobiliser le composant prothétique dentaire sur l'implant dentaire. Le risque de perte ou d'avalement par le patient de la vis de fixation est ainsi efficacement réduit.

Simultanément, la vis de fixation n'est pas insérée à travers le composant prothétique dentaire en cheminant successivement à travers le deuxième tronçon de passage puis le premier tronçon de passage. Les dimensions transversales du deuxième tronçon de passage peuvent ainsi être réduites puisque seul le passage de l'outil de vissage reste nécessaire, et cet outil peut avoir une dimension transversale très inférieure à celle de la tête de la vis de fixation. Cela limite le retrait de matière pratiqué dans le composant prothétique dentaire pour ménager le deuxième tronçon de passage. Les risques d'affaiblissement de la résistance mécanique du composant prothétique dentaire sont ainsi réduits.

Avantageusement, les premier et deuxième tronçons de passage peuvent former un angle non nul entre eux.

Le caractère angulé du deuxième passage traversant permet de disposer l'émergence coronaire du puits d'accès à l'écart des parties actives du composant prothétique dentaire lors de la mastication (cuspides), notamment lorsque le composant prothétique dentaire est :
- une âme de prothèse dentaire comportant une forme extérieure sensiblement en forme de dent, en métal ou en céramique, ou
- un bloc de céramique de forme extérieure sensiblement cylindrique ou prismatique et destiné à être usiné pour obtenir une forme extérieure sensiblement en forme de dent.

De préférence, le composant prothétique dentaire peut comprendre une extrémité proximale conformée pour venir porter directement en appui contre l'extrémité distale de l'implant dentaire. On limite ainsi le nombre de composants. Dans le cas d'un composant prothétique dentaire en céramique, on pourra avantageusement avoir recours à un implant dentaire également en céramique, pour obtenir un contact céramique sur céramique évitant des phénomènes d'usure prématurée de l'implant dentaire.

Avantageusement, l'ensemble peut comporter des moyens d'indexation en rotation du composant prothétique dentaire et de l'implant dentaire autour du deuxième axe longitudinal.

La pièce intermédiaire de fixation de la présente invention peut permettre de rapporter et fixer sur un implant dentaire, parfois de façon seulement précaire :
- un composant prothétique dentaire de type pilier dentaire,
- ou une âme de prothèse dentaire comportant une forme extérieure sensiblement en forme de dent, en métal ou en céramique,
- ou un bloc de céramique de forme extérieure sensiblement cylindrique ou prismatique et destiné à être usiné pour obtenir une forme extérieure sensiblement en forme de dent,
- ou un outil dentaire de type transfert d'empreinte, porte-implant, corps de scannage intra-oral, capuchon de cicatrisation ou capuchon d'obturation, ledit outil dentaire s'étendant selon un quatrième axe longitudinal et comportant un alésage intérieur muni d'une troisième gorge destinée à recevoir par encliquetage les parties distales libres des ailettes du premier ensemble d'ailettes longitudinales.

Selon un autre aspect, la présente description propose un ensemble comprenant :
- une pièce intermédiaire de fixation telle que précédemment décrite,
- un analogue d'implant dentaire s'étendant selon un cinquième axe longitudinal entre une extrémité proximale et une extrémité distale, à logement intérieur de connexion s'étendant depuis l'extrémité distale et en direction de l'extrémité proximale, lequel logement intérieur de connexion comporte une quatrième gorge destinée à recevoir par encliquetage les parties distales libres des ailettes du deuxième ensemble d'ailettes longitudinales.

De préférence, on prévoit des moyens d'indexation en rotation de l'outil dentaire ou de l'analogue d'implant dentaire autour du quatrième axe ou du cinquième axe longitudinal.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation particulier de pièce intermédiaire de fixation selon invention ;
- la figure 2 est une vue de côté de la pièce intermédiaire de fixation de la figure 1 ;
- la figure 3 est une vue en coupe longitudinale d'un mode de réalisation particulier de premier ensemble selon l'invention, comportant un implant dentaire et la pièce intermédiaire de fixation de la figure 1 ;
- la figure 4 est une vue en perspective d'un insert fileté intérieurement utilisé dans le cadre du premier ensemble de la figure 3 ;
- la figure 5 est une vue en coupe transversale du premier ensemble de la figure 3 ;
- la figure 6 est une vue en coupe longitudinale d'un composant prothétique dentaire de type âme de prothèse dentaire comportant une forme extérieure sensiblement en forme de dent, en métal ou en céramique ;
- la figure 7 est une vue en coupe longitudinale d'un mode de réalisation particulier de premier ensemble selon l'invention avec le composant prothétique dentaire de la figure 6 ;
- la figure 8 est une vue en perspective du premier ensemble de la figure 3 avec un composant prothétique dentaire de type pilier dentaire ;
- la figure 9 est une vue en coupe longitudinale du premier ensemble de la figure 8 ;
- la figure 10 est une vue en perspective du premier ensemble de la figure 3 avec un outil dentaire de type porte-implant ;
- la figure 11 est une vue en coupe longitudinale du premier ensemble de la figure 10 ;
- la figure 12 est une vue en perspective du premier ensemble de la figure 3 avec un outil dentaire de type capuchon de cicatrisation ;
- la figure 13 est une vue en coupe longitudinale du premier ensemble de la figure 12 ;
- la figure 14 est une vue en perspective du premier ensemble de la figure 3 avec un outil dentaire de type capuchon d'obturation ;
- la figure 15 est une vue en coupe longitudinale du premier ensemble de la figure 14 ;
- la figure 16 est une vue en perspective du premier ensemble de la figure 3 avec un outil dentaire de type corps de scannage intra-oral ;
- la figure 17 est une vue en coupe longitudinale du premier ensemble de la figure 16 ;
- la figure 18 est une vue en perspective et en coupe longitudinale du premier ensemble de la figure 3 avec un outil dentaire de type transfert d'empreinte ;
- la figure 19 est une vue de côté d'un deuxième mode de réalisation particulier de pièce intermédiaire de fixation selon invention ;
- la figure 20 est une vue partielle et en coupe longitudinale d'un premier ensemble selon l'invention, comportant un implant dentaire et la pièce intermédiaire de fixation de la figure 19 ;
- la figure 21 est une vue en coupe longitudinale d'une variante d'implant dentaire destiné à être combiné avec les pièces intermédiaire de fixation des figures 1 ou 19 pour former une variante de premier ensemble selon l'invention ; et
- la figure 22 est une vue en coupe longitudinale d'un analogue d'implant dentaire destiné à être combiné avec les pièces intermédiaire de fixation des figures 1 ou 19 pour former un deuxième ensemble.

### DESCRIPTION DES MODES DE REALISATION PREFERES

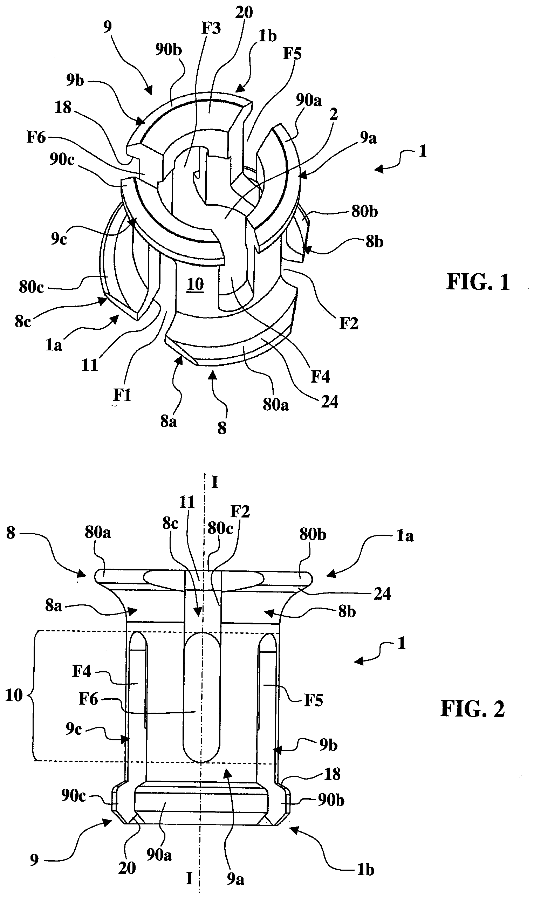

Sur les figures 1 et 2 est illustré un premier mode de réalisation particulier de pièce intermédiaire de fixation 1 selon invention.

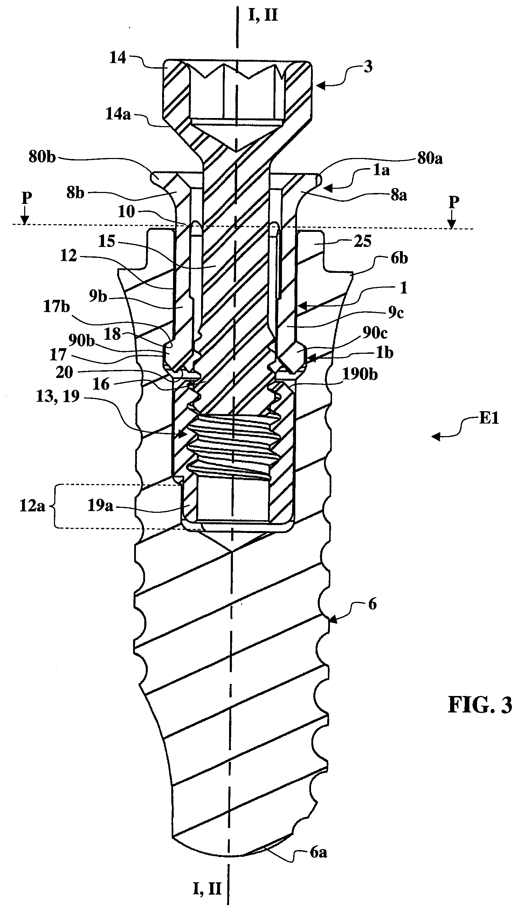

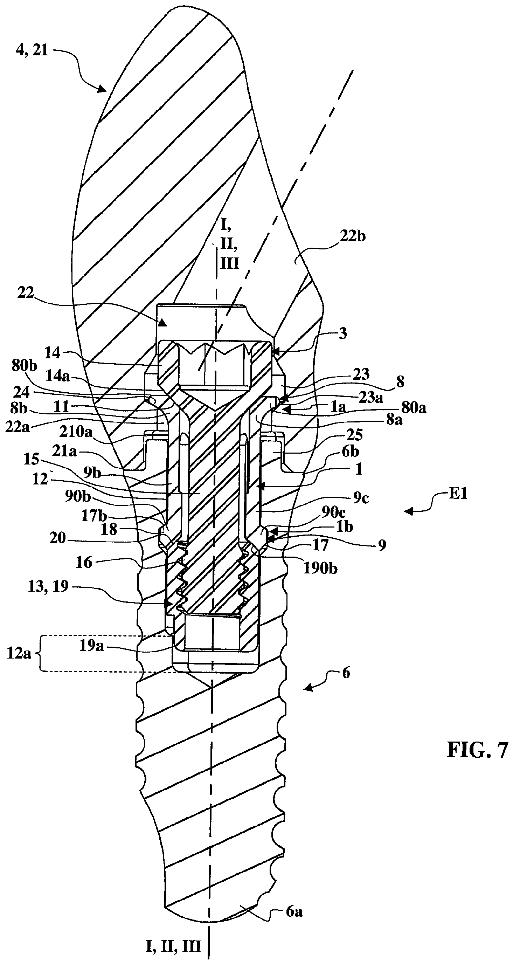

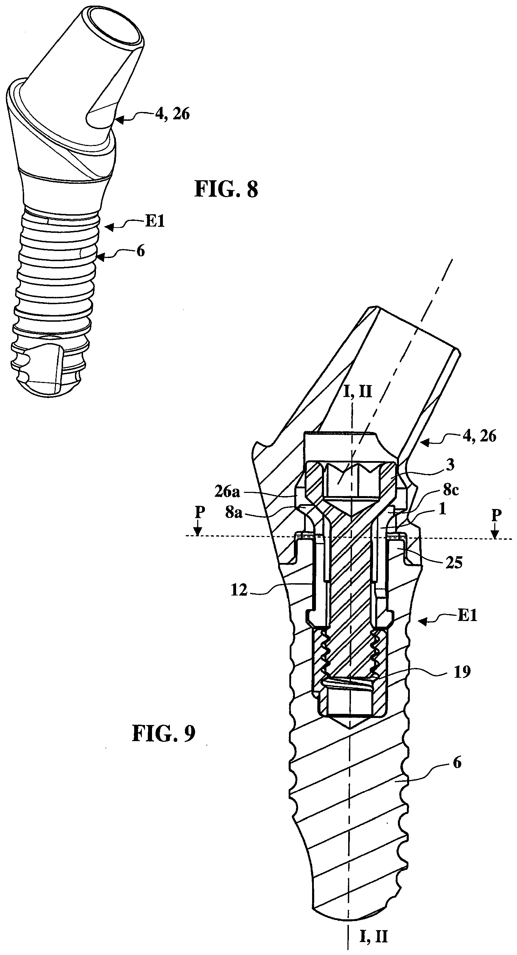

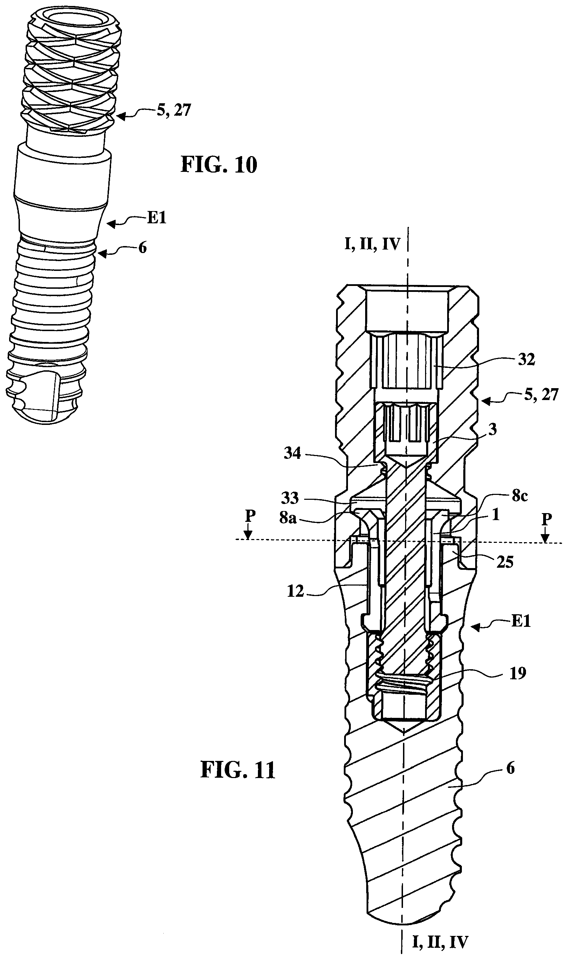

Cette pièce intermédiaire de fixation 1 est sensiblement tubulaire à premier passage traversant 2 autorisant le passage d'un élément fileté tel qu'une vis de fixation 3 (figure 3) pour la fixation d'un composant prothétique dentaire 4 transvissé (figures 7 et 9) ou d'un outil dentaire 5 (figures 11, 13, 15, 17 et 18) sur un implant dentaire 6 ou sur un analogue 7 d'implant dentaire.

La pièce intermédiaire de fixation 1 s'étend selon un premier axe longitudinal I-I entre une première extrémité 1a et une deuxième extrémité 1b.

La première extrémité 1a comporte un premier ensemble 8 d'ailettes longitudinales 8a à 8c, chaque ailette longitudinale 8a à 8c comportant une partie distale libre 80a à 80c radialement déplaçable de façon élastique par rapport au premier axe longitudinal I-I pour s'engager par encliquetage dans le composant prothétique dentaire 4 ou dans l'outil dentaire 5.

La deuxième extrémité 1b comporte un deuxième ensemble 9 d'ailettes longitudinales 9a à 9c, chaque ailette longitudinale 9a à 9c comportant une partie distale libre 90a à 90c radialement déplaçable de façon élastique par rapport au premier axe longitudinal I-I pour s'engager par encliquetage dans l'implant dentaire 6.

Les premier 8 et deuxième 9 ensembles d'ailettes longitudinales 8a-8c et 9a-9c sont définis par une pluralité de fentes longitudinales F1 à F6 s'étendant chacune sur une partie seulement de la longueur de la pièce intermédiaire de fixation 1 et prenant naissance de façon alternée depuis la première extrémité 1a (fentes F1 à F3) et depuis la deuxième extrémité 1b (fentes F4 à F6). Les fentes F1 à F6 s'étendent toutes selon un même tronçon axial intermédiaire 10 de la pièce intermédiaire de fixation 1. De cette façon, les ailettes longitudinales 8a-8c du premier ensemble 8, définies par les fentes F1 à F3, présentent un recouvrement selon leur longueur (sur le tronçon axial intermédiaire 10) avec les ailettes longitudinales 9a-9c du deuxième ensemble 9, définies par les fentes F4 à F6.

Sur la figure 3 est illustré un mode de réalisation particulier de premier ensemble E1 selon l'invention, comprenant un implant dentaire 6 et la pièce intermédiaire de fixation 1 des figures 1 et 2.

L'implant dentaire 6 s'étend selon un deuxième axe longitudinal II-II entre une extrémité proximale 6a et une extrémité distale 6b. Il comprend un logement intérieur de connexion 12 s'étendant depuis l'extrémité distale 6b et en direction de l'extrémité proximale 6a, et comprenant un tronçon proximal 13 fileté intérieurement.

Le premier ensemble E1 comprend également une vis de fixation 3 comportant une tête de vis 14 depuis laquelle s'étend une tige de vis 15 munie d'un tronçon fileté 16 destiné à être reçu par vissage dans le tronçon proximal 13 fileté intérieurement de l'implant dentaire 6.

Le logement intérieur de connexion 12 comporte une première gorge 17, ménagée entre le tronçon proximal 13 fileté intérieurement et l'extrémité distale 6b de l'implant dentaire 6, et destinée à recevoir par encliquetage les parties distales libres 90a à 90c des ailettes longitudinales 9a à 9c.

L'encliquetage des parties distales libres 90a à 90c des ailettes longitudinales 9a à 9c est réversible. Pour ce faire, il est fait usage d'un tronçon distal 17b tronconique de première gorge 17 conformé de façon à induire un déplacement (rapprochement) des parties distales libres 90a à 90c des ailettes longitudinales 9a à 9c vers le premier axe longitudinal I-I lorsqu'il est appliqué une traction de la pièce intermédiaire de fixation 1 selon le premier axe longitudinal I-I à l'écart de l'extrémité proximale 6a de l'implant dentaire 6.

On relève que les parties distales libres 90a à 90c des ailettes longitudinales 9a à 9c comportent une surface de contact 18 sensiblement tronconique. Cette surface de contact 18 sensiblement tronconique est sensiblement complémentaire du tronçon distal 17b tronconique de première gorge 17, pour assurer un contact surfacique procurant une bonne répartition des efforts entre la pièce intermédiaire de fixation 1 et l'implant dentaire 6 lorsqu'il est appliqué un effort axial selon le premier axe longitudinal I-I tendant à extraire la pièce intermédiaire de fixation 1 hors de l'implant dentaire 6.

On voit plus particulièrement sur la figure 3 que tronçon proximal 13 fileté intérieurement de l'implant dentaire 6 est constitué par un insert fileté intérieurement 19, rapporté et indexé en rotation dans le logement intérieur de connexion 12.

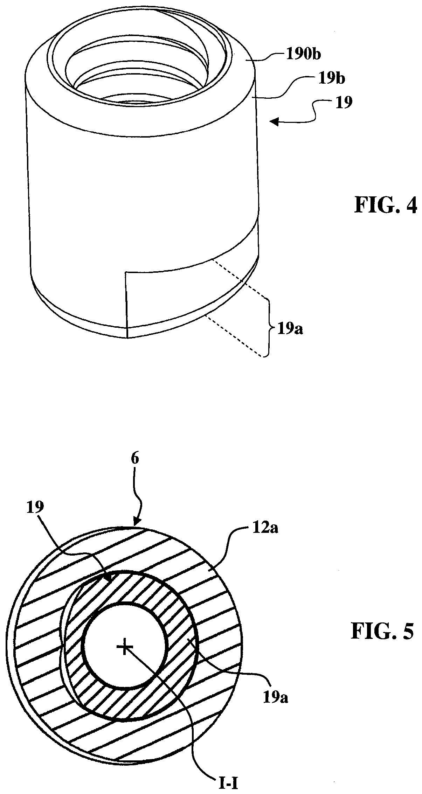

L'insert fileté intérieurement 19 est mieux représenté sur la figure 4. Celui-ci comporte un tronçon proximal 19a à section transversale de forme non circulaire et destiné à pénétrer dans un tronçon d'extrémité 12a du logement intérieur de connexion 12. Le tronçon d'extrémité 12a comporte lui aussi une forme de section transversale non circulaire dans laquelle est inscrite la forme de section transversale non circulaire du tronçon proximal 19a, comme cela est plus particulièrement visible sur la figure 5. Le tronçon d'extrémité 12a et le tronçon proximal 19a coopèrent, du fait de leurs formes de sections transversales non circulaires, pour indexer en rotation l'insert fileté intérieurement 19 dans le logement intérieur de connexion 12 selon le premier axe longitudinal I-I. Cette coopération permet le vissage (dévissage) de la vis de fixation 3 dans (hors de) l'insert fileté intérieurement 19.

L'insert fileté intérieurement 19 est retenu captif dans logement intérieur de connexion 12 lorsque la pièce intermédiaire de fixation 1 est encliquetée dans l'implant dentaire 6.

On remarque sur la figure 4 que l'insert fileté intérieurement 19 comporte un tronçon distal 19b présentant une surface latérale tronconique 190b. Du côté de la pièce intermédiaire de fixation 1, les parties distales libres 90a à 90c des ailettes longitudinales 9a à 9c comportent un siège 20 sensiblement tronconique et sensiblement complémentaire adapté pour recevoir en appui le tronçon distal 19a (en étant sensiblement complémentaire pour procurer un appui surfacique).

Lorsque l'insert fileté intérieurement 19 est en appui axialement contre la deuxième extrémité 1b de la pièce intermédiaire de fixation 1 (figure 7), cet appui s'oppose à un retrait de la deuxième extrémité 1b de la pièce intermédiaire de fixation 1 hors de la première gorge 17 : les parties distales libres 90a à 90c des ailettes longitudinales 9a à 9c ne peuvent en effet plus se déplacer vers le premier axe longitudinal I-I pour s'échapper hors de la première gorge 17.

Dans le cas où, après encliquetage des parties distales libres 90a à 90c dans la première gorge 17, les épanouissements radiaux des parties distales libres 90a à 90c ne pénètrent que partiellement dans la première gorge 17 (de façon à procurer un encliquetage et une séparation facilités de la pièce intermédiaire de fixation 1 et de l'implant dentaire 6), on peut prévoir qu'un déplacement relatif en translation de l'insert fileté intérieurement 19 vers l'extrémité distale 6b de l'implant dentaire 6 selon le deuxième axe longitudinal II-II provoque une expansion radiale de la deuxième extrémité 1b de la pièce intermédiaire de fixation 1. Cela augmente la pénétration des épanouissements radiaux des parties distales libres 90a à 90c dans la première gorge 17 et accroît ainsi la retenue de la pièce intermédiaire de fixation 1 dans l'implant dentaire 6.

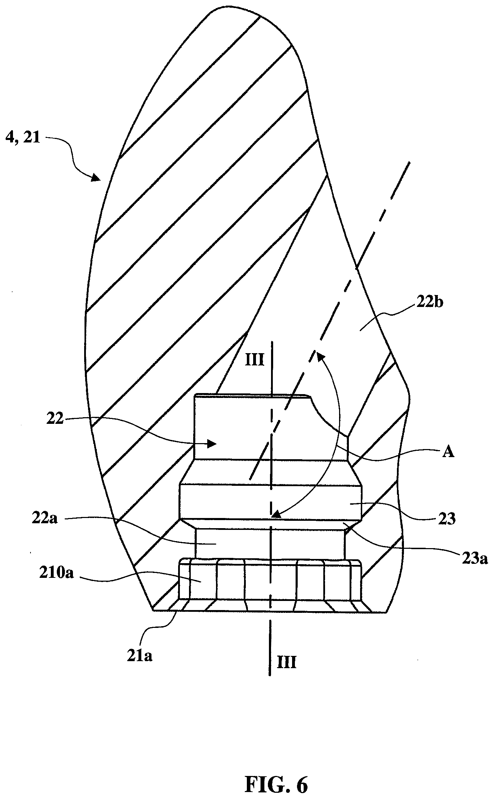

Sur la figure 6 est illustré un composant prothétique dentaire 4 de type âme de prothèse dentaire 21 comportant une forme extérieure sensiblement en forme de dent. Cette âme de prothèse dentaire 21 est réalisée en métal ou en céramique. Lorsqu'elle est en céramique, elle est obtenue par usinage d'un bloc de céramique ou produite par frittage d'une poudre céramique, et peut éventuellement être revêtue par le prothésiste d'une ou plusieurs couches très légères de texturation ou de coloration procurant un aspect le plus proche d'une dent naturelle.

L'âme de prothèse dentaire 21 comprend un deuxième passage traversant 22 constitué par des premier 22a et deuxième 22b tronçons de passage successifs, ledit premier tronçon de passage 22a s'étendant depuis une extrémité proximale 21a de l'âme de prothèse dentaire 21 selon un troisième axe longitudinal III-III, et ledit deuxième tronçon de passage 22b prolongeant le premier tronçon de passage 22a.

Le premier tronçon de passage 22a comporte une deuxième gorge 23 destinée à recevoir par encliquetage les parties distales libres 80a à 80c des ailettes longitudinales 8a à 8c du premier ensemble 8.

On voir plus particulièrement sur la figure 7 que la première extrémité 1a de la pièce intermédiaire de fixation 1 et la tête 14 de la vis de fixation 3 sont conformées de façon que, lorsque la tête 14 de la vis de fixation 3 est en appui axialement contre la première extrémité 1a de la pièce intermédiaire de fixation 1, cet appui s'oppose à un retrait de la première extrémité 1a de la pièce intermédiaire de fixation 1 hors de la deuxième gorge 23.

De façon plus précise, la pièce intermédiaire de fixation 1 comporte, à sa première extrémité 1a, un siège sensiblement tronconique 11 contre lequel vient porter en appui la surface tronconique 14a prévue sous la tête de vis 14. La surface 14a et le siège 11 tronconiques sont sensiblement complémentaires pour procurer un appui surfacique permettant de répartir les efforts.

Là encore, dans le cas où, après encliquetage des parties distales libres 80a à 80c dans la deuxième gorge 23, les épanouissements radiaux des parties distales libres 80a à 80c ne pénètrent que partiellement dans la deuxième gorge 23 (de façon à procurer un encliquetage et une séparation facilités de la pièce intermédiaire de fixation 1 et de l'âme de prothèse dentaire 21), on peut prévoir qu'un déplacement relatif en translation de la tête 14 de vis de fixation 3 vers l'extrémité proximale 6a de l'implant dentaire 6 selon le deuxième axe longitudinal II-II provoque une expansion radiale de la première extrémité 1a de la pièce intermédiaire de fixation 1. Cela augmente la pénétration des épanouissements radiaux des parties distales libres 80a à 80c dans la deuxième gorge 23 et accroît ainsi la retenue de la pièce intermédiaire de fixation 1 dans l'âme de prothèse dentaire 21.

On observe plus particulièrement sur la figure 2 que la première extrémité 1a de la pièce intermédiaire de fixation 1 comporte une surface de contact 24 sensiblement tronconique. De son côté, la deuxième gorge 23 comporte un tronçon proximal 23a tronconique (sensiblement complémentaire de la surface de contact 24). Lorsqu'il se produit une expansion radiale de la première extrémité 1a de la pièce intermédiaire de fixation 1, cette expansion radiale induit selon le deuxième axe longitudinal II-II un pressage axial de l'extrémité proximale 21a du composant prothétique dentaire 4 (l'âme de prothèse dentaire 21) vers l'extrémité distale 6b de l'implant dentaire 6.

L'âme de prothèse dentaire 21 comprend d'ailleurs une extrémité proximale 21a conformée pour venir porter directement en appui contre l'extrémité distale 6b de l'implant dentaire 6. Le pressage axial permet donc d'assurer une étanchéité entre l'âme de prothèse dentaire 21 et l'implant dentaire 6.

On remarque sur la figure 7 que le premier tronçon de passage 22a de l'âme de prothèse dentaire 21 comporte des dimensions transversales permettant la réception de la première extrémité 1a de la pièce intermédiaire de fixation 1 et de la tête de vis 14 par pénétration axiale selon le troisième axe longitudinal III-III depuis l'extrémité proximale 21a de l'âme de prothèse dentaire 21. Le deuxième tronçon de passage 22b de l'âme de prothèse dentaire 21 comporte quant à lui des dimensions transversales inférieures à celles du premier tronçon de passage 22a, mais suffisantes pour le passage d'un outil permettant d'entraîner en rotation la vis de fixation 3 selon le deuxième axe longitudinal II-II.

Il est plus particulièrement visible sur la figure 6 que les premier 22a et deuxième 22b tronçons de passage forment un angle A non nul entre eux.

Des moyens d'indexation permettent d'indexer en rotation l'âme de prothèse dentaire 21 et l'implant dentaire 6 autour du deuxième axe longitudinal II-II. En l'espèce, les moyens d'indexation comprennent un logement proximal 210a à section transversale non circulaire (ici hexagonale) recevant à faible jeu un prolongement distal 25 hexagonal de l'implant dentaire 6.

En alternative à une âme de prothèse dentaire 21 comportant une forme extérieure sensiblement en forme de dent, l'âme de prothèse dentaire 21 peut être un bloc de céramique de forme extérieure sensiblement cylindrique ou prismatique et destiné à être usiné pour obtenir une forme extérieure sensiblement en forme de dent (comme par exemple illustré dans les documents KR 10-2013-0097820, US 2012/0251979 et EP 2 837 357).

La pièce de fixation intermédiaire 1 permet de rapporter et fixer sur l'implant dentaire 6 d'autres types de pièce prothétique dentaire 4. Sur les figures 8 et 9, le composant prothétique dentaire 4 est un pilier dentaire 26. Sa configuration intérieure est similaire à celle de l'âme de prothèse dentaire 21, avec une gorge 26a recevant par encliquetage les parties distales libres 80a à 80c des ailettes longitudinales 8a à 8c pour une fixation précaire. La vis de fixation 3 permet de fixer de façon plus solide le pilier dentaire 26 sur l'implant dentaire 6 de la même façon que l'âme de prothèse dentaire 21 par appui sur la deuxième extrémité 1b de la pièce intermédiaire de fixation 1.

La pièce de fixation intermédiaire 1 permet aussi de rapporter et fixer sur l'implant dentaire 6 l'un d'une pluralité d'outils dentaires 5 (figures 10 à 18). Tous ces outils dentaires 5 s'étendent selon un quatrième axe longitudinal IV-IV et comportent un alésage intérieur 32 muni d'une troisième gorge 33 destinée à recevoir par encliquetage les parties distales libres 80a-80c des ailettes longitudinales 8a-8c du premier ensemble d'ailettes 8.

Sur les figures 10 et 11, le premier ensemble E1 comporte un outil dentaire 5 de type porte-implant 27. L'encliquetage des ailettes longitudinales 8a-8c dans la troisième gorge 33 ne procure qu'une fixation temporaire et précaire. Une fixation plus robuste du porte-implant 27 est obtenue par la vis de fixation 3 venant en appui contre un siège 34 prévu dans le porte-implant 27. Le porte-implant 27 permet de transporter l'implant dentaire 6 puis de l'insérer par vissage dans l'os de la mâchoire du patient à l'aide d'une pièce à main dentaire.

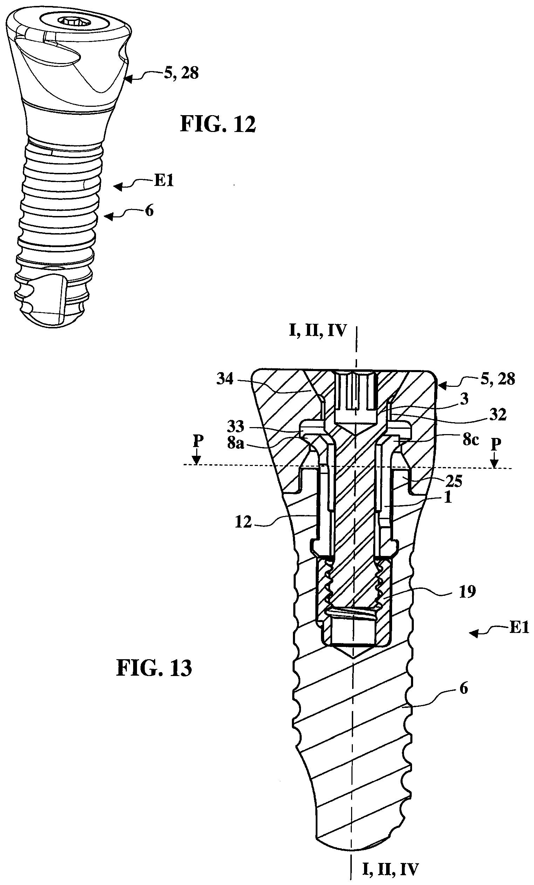

Sur les figures 12 et 13, le premier ensemble E1 comporte un outil dentaire 5 de type capuchon de cicatrisation 28. L'encliquetage des ailettes longitudinales 8a-8c dans la troisième gorge 33 ne procure qu'une fixation temporaire et précaire. Une fixation plus robuste du capuchon de cicatrisation 28 est obtenue par la vis de fixation 3 venant en appui de façon étanche contre un siège 34 prévu dans le porte-implant 27. Le capuchon de cicatrisation 28 a une forme asymétrique permettant de tenir compte de la forme et de la hauteur de la gencive du côté intérieur et du côté extérieur de l'arcade dentaire. Le capuchon de cicatrisation 28 obture l'implant dentaire 6 pendant la période d'ostéo-intégration de l'implant dentaire 6 (pour éviter la pénétration d'impuretés dans son logement intérieur de connexion 12), période lors de laquelle va également cicatriser la gencive autour de l'implant dentaire 6 pour bien recouvrir l'os.

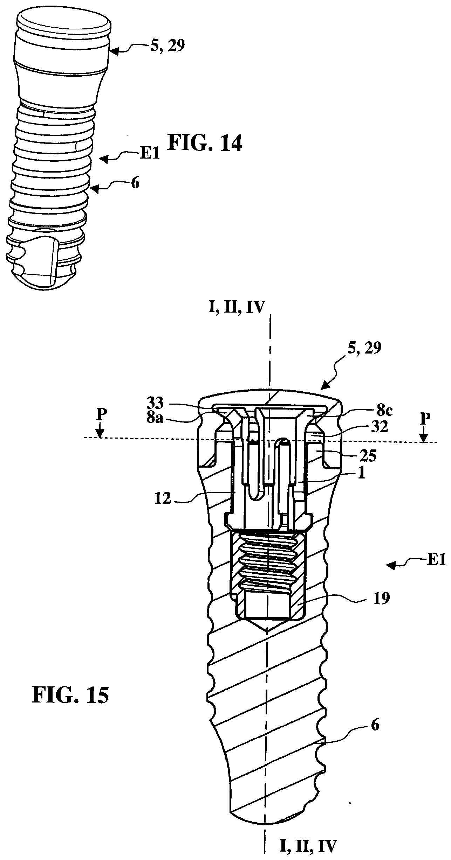

Sur les figures 14 et 15, le premier ensemble E1 comporte un outil dentaire 5 de type capuchon d'obturation 29. L'encliquetage des ailettes longitudinales 8a-8c dans la troisième gorge 33 ne procure qu'une fixation temporaire et précaire. Ici, il n'est pas prévu de fixation plus robuste. Le capuchon d'obturation 29 a une forme symétrique et permet d'obturer temporairement de façon étanche l'implant dentaire 6 pour éviter la pénétration d'impuretés dans son logement intérieur de connexion 12.

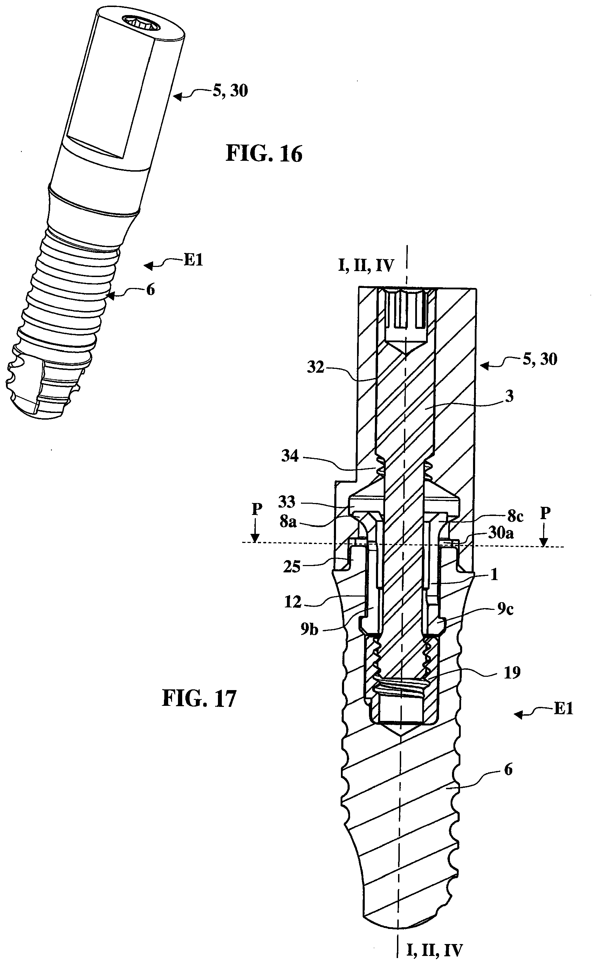

Sur les figures 16 et 17, le premier ensemble E1 comporte un outil dentaire 5 de type corps de scannage intra-oral 30. L'encliquetage des ailettes longitudinales 8a-8c dans la troisième gorge 33 ne procure qu'une fixation temporaire et précaire. Une fixation plus robuste du corps de scannage intra-oral 30 est obtenue par la vis de fixation 3 venant en appui contre un siège 34 prévu dans le corps de scannage intra-oral 30. Le corps de scannage intra-oral 30 a une forme asymétrique (au moyen d'un méplat) et est indexé en rotation sur l'implant dentaire 6 par un logement proximal 30a à section transversale non circulaire (hexagonal ici) coopérant avec le prolongement distal 25 à section transversale non circulaire (également hexagonal ici) de l'implant dentaire 6. Le corps de scannage intra-oral 30 permet de repérer la position et l'orientation de l'implant dentaire 6 dans l'os de mâchoire du patient pour prévoir des composants prothétiques dentaires adaptés destinés à être rapportés et fixés sur l'implant dentaire 6.

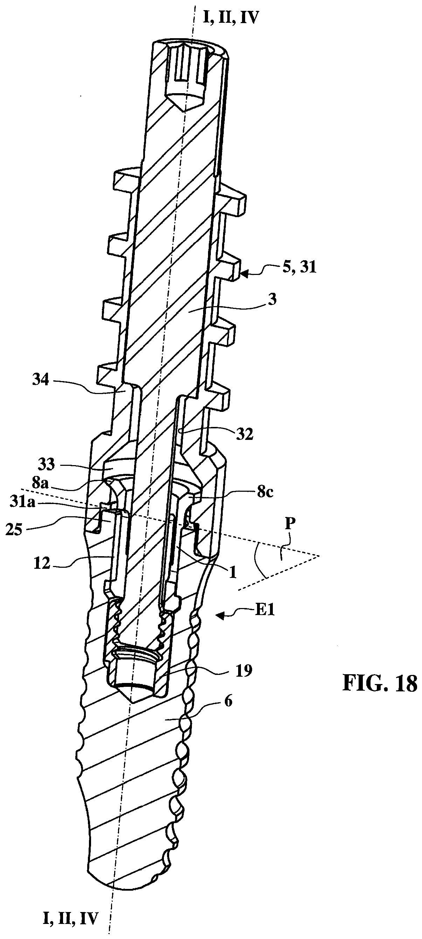

Sur la figure 18, le premier ensemble E1 comporte un outil dentaire 5 de type transfert d'empreinte 31 (parfois appelé « transfert pick-up »). L'encliquetage des ailettes longitudinales 8a-8c dans la troisième gorge 33 ne procure qu'une fixation temporaire et précaire. Une fixation plus robuste du transfert d'empreinte 31 est obtenue par la vis de fixation 3 venant en appui contre un siège 34 prévu dans le transfert d'empreinte 31. Le transfert d'empreinte 31 a une forme asymétrique et est indexé en rotation sur l'implant dentaire 6 par un logement proximal 31a à section transversale non circulaire (hexagonal ici) coopérant avec le prolongement distal 25 à section transversale non circulaire (également hexagonal ici) de l'implant dentaire 6. Le transfert d'empreinte 31 permet de repérer la position et l'orientation de l'implant dentaire 6 dans l'os de mâchoire du patient pour fabriquer ensuite un maître-modèle (généralement en plâtre) permettant au prothésiste dentaire de prévoir des composants prothétiques dentaires adaptés destinés à être rapportés et fixés sur l'implant dentaire 6.

Grâce à la fixation au moins précaire procurée par la pièce intermédiaire de fixation 1, les manipulations des praticiens (prothésiste et chirurgien-dentiste) sont facilitées lors d'une restauration prothétique dentaire, du fait de la constitution d'assemblages ou sous-assemblages facilitant le transport (de l'implant dentaire 6 notamment) et limitant les risques de perte ou d'avalement de composants prothétiques dentaires 4 ou d'outils dentaires 5, notamment avant que la vis de fixation soit mise en place dans l'implant dentaire 6.

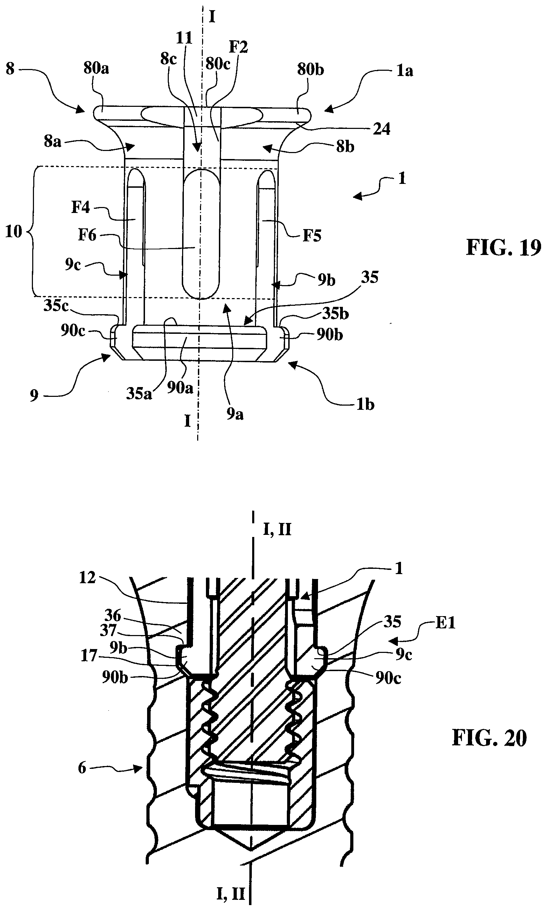

Sur les figures 8 à 18, il est fait usage d'une pièce intermédiaire de fixation 1 selon un deuxième mode de réalisation de l'invention, plus particulièrement visible sur la figure 19. Cette pièce intermédiaire de fixation 1 diffère de celle des figures 1 et 2 en ce que les extrémités distales 90a à 90c comportent des facettes 35a à 35c planes sensiblement perpendiculaires au premier axe longitudinal I-I et orientées vers la première extrémité 1a. Les facettes 35a à 35c forment une surface de contact 35 sensiblement en forme de couronne.

De son côté, la première gorge 17 dans l'implant dentaire 6 forme un épaulement 36 comportant une face d'appui 37 perpendiculaire au premier axe longitudinal I-I et orientée vers l'extrémité proximale 6a de l'implant dentaire 6 (figure 20). La face d'appui 37 est en forme de couronne circulaire.

La surface de contact 35 et la face d'appui 37 procurent un encliquetage irréversible de la pièce intermédiaire de fixation 1 dans l'implant dentaire 6. Lorsque les ailettes longitudinales 9a à 9c sont encliquetées dans la première gorge 17 (voir figure 20), la surface de contact 35 sensiblement en forme de couronne et la face d'appui 37 s'opposent en effet à une extraction de la pièce intermédiaire de fixation 1 hors de l'implant dentaire 6.

On relève sur les figures 9, 11, 13, 15, 17 et 18 que lorsque la pièce intermédiaire de fixation 1 est encliquetée dans l'implant dentaire 6, le tronçon axial intermédiaire 10 dépasse hors de l'implant dentaire 6 (les fentes F4 à F6 se prolongent en effet au-delà du prolongement distal 25). Ainsi, dans le cas où il serait nécessaire d'extraire l'insert fileté intérieurement 19, la pièce intermédiaire de fixation 1 peut être tronçonnée selon un plan P perpendiculaire au premier axe longitudinal I-I et intersectant le tronçon axial intermédiaire 10. Les ailettes 9a à 9c sont alors désolidarisées et peuvent être retirées hors de l'implant dentaire 6.

Le dépassement du tronçon axial intermédiaire 10 hors de l'implant dentaire 6 est également présent dans le premier mode de réalisation (voir figure 3), ce qui garantit une possibilité d'extraction de la pièce intermédiaire de fixation 1 dans le cas où le praticien ne parvient pas à désencliqueter la deuxième extrémité 1b hors de la première gorge 17.

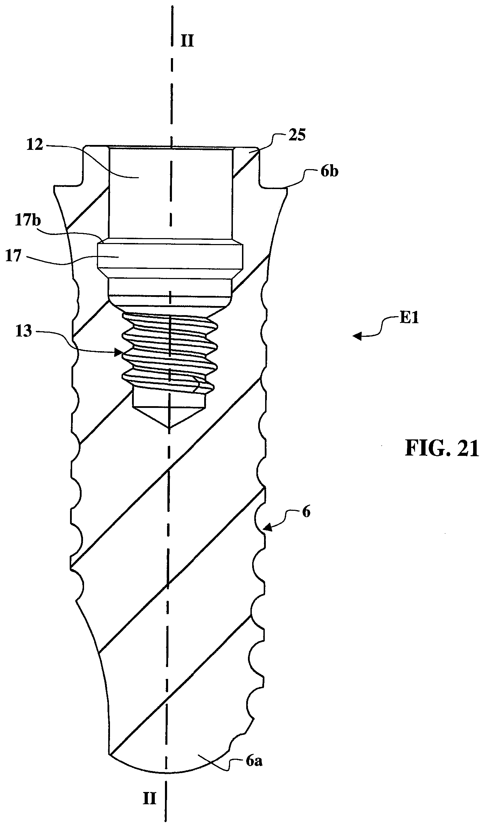

Sur la figure 21 est illustrée une variante d'implant dentaire 6 destinée à être combinée avec les pièces intermédiaire de fixation 1 des figures 1 et 2 pour former une variante de premier ensemble E1 selon l'invention. Dans cet implant dentaire 6, il n'est pas fait usage d'un insert fileté intérieurement 19, le tronçon proximal 13 fileté étant ménagé directement dans la paroi latérale du logement intérieur de connexion 12. On observe que la première gorge 17 comporte un tronçon distal 17b tronconique pour permettre un encliquetage réversible de la pièce intermédiaire de fixation 1. Il peut néanmoins être fait usage en alternative d'un épaulement 36 comme sur la figure 20, pour assurer un encliquetage irréversible.

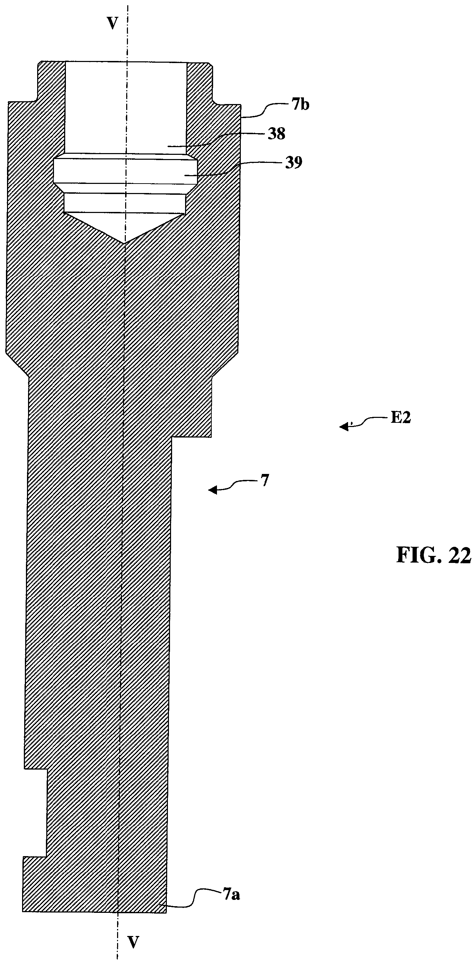

Sur la figure 22 est illustré un analogue d'implant dentaire 37 destiné à recevoir une pièce intermédiaire de fixation 1 pour former un deuxième ensemble E2.

L'analogue d'implant dentaire 7 s'étend selon un cinquième axe longitudinal V-V entre une extrémité proximale 7a et une extrémité distale 7b, et comprend un logement intérieur de connexion 38 s'étendant depuis l'extrémité distale 7b et en direction de l'extrémité proximale 7a. Le logement intérieur de connexion 38 comporte une quatrième gorge 39 destinée à recevoir par encliquetage les parties distales libres 90a à 90c des ailettes longitudinales 9a à 9c du deuxième ensemble d'ailettes 9.

La pièce intermédiaire de fixation 1 permet de fixer par encliquetage, de façon réversible, un composant prothétique dentaire 4 lors de son élaboration par posages successifs sur l'analogue d'implant dentaire 7 contenu dans un maître-modèle. La fixation réversible par encliquetage est certes précaire, mais elle est suffisante pour le travail du prothésiste, et elle évite d'avoir recours à une vis de fixation 3 qui est toujours longue à visser ou dévisser.

La présente invention n'est pas limitée aux modes de réalisation qui ont été explicitement décrits, l'étendue de la protection est définie par les revendications ci-après.

## Revendications

1. Ensemble (E1) comprenant une pièce intermédiaire de fixation (1) sensiblement tubulaire à premier passage traversant (2) pour la fixation d'un composant prothétique dentaire (4) transvissé ou d'un outil dentaire (5) sur un implant dentaire (6), ladite pièce intermédiaire de fixation (1) s'étendant selon un premier axe longitudinal (I-I) entre une première extrémité (1a) et une deuxième extrémité (1b), et dans laquelle :
- la première extrémité (1a) comporte un premier ensemble (8) d'ailettes longitudinales (8a-8c), chaque ailette longitudinale (8a-8c) comportant une partie distale libre (80a-80c) radialement déplaçable de façon élastique pour s'engager par encliquetage dans le composant prothétique dentaire (4) ou dans l'outil dentaire (5),
- l'ensemble (E1) comprend un implant dentaire (6) s'étendant selon un deuxième axe longitudinal (II-II) entre une extrémité proximale (6a) et une extrémité distale (6b), à logement intérieur de connexion (12) s'étendant depuis l'extrémité distale (6b) et en direction de l'extrémité proximale (6a) et comprenant un tronçon proximal (13) fileté intérieurement,
- l'ensemble (E1) comprend une vis de fixation (3) comportant une tête de vis (14) depuis laquelle s'étend une tige de vis (15) munie d'un tronçon fileté (16) destiné à être reçu par vissage dans le tronçon proximal (13) fileté intérieurement de l'implant dentaire (6),
**caractérisé en ce que** :
- la deuxième extrémité (1b) comporte un deuxième ensemble (9) d'ailettes longitudinales (9a-9c), chaque ailette longitudinale (9a-9c) comportant une partie distale libre (90a-90c) radialement déplaçable de façon élastique pour s'engager par encliquetage dans l'implant dentaire (6),
- les premier (8) et deuxième (9) ensembles d'ailettes longitudinales (8a-8c ; 9a-9c) sont définis par une pluralité de fentes longitudinales (F1-F6) s'étendant sur une partie seulement de la longueur de la pièce intermédiaire de fixation (1) et prenant naissance de façon alternée depuis la première extrémité (1a) et depuis la deuxième extrémité (1b), lesdites fentes (F1-F6) s'étendant selon un même tronçon axial intermédiaire (10) de la pièce intermédiaire de fixation (1) de sorte que les ailettes longitudinales (8a-8c ; 9a-9c) des premier (8) et deuxième (9) ensembles présentent un recouvrement selon leur longueur,
- le logement intérieur de connexion (12) comporte une première gorge (17), ménagée entre le tronçon proximal (13) fileté intérieurement et l'extrémité distale (6b) de l'implant dentaire (6), et destinée à recevoir par encliquetage les parties distales libres (90a-90c) des ailettes (9a-9c) du deuxième ensemble (9) d'ailettes longitudinales (9a-9c).

2. Ensemble (E1) selon la revendication 1, **caractérisé en ce que** l'encliquetage des parties distales libres (90a-90c) des ailettes (9a-9c) du deuxième ensemble (9) d'ailettes longitudinales (9a-9c) est irréversible.

3. Ensemble (E1) selon la revendication 1, **caractérisé en ce que** l'encliquetage des parties distales libres (90a-90c) des ailettes (9a-9c) du deuxième ensemble (9) d'ailettes longitudinales (9a-9c) est réversible.

4. Ensemble (E1) selon l'une quelconque des revendications 1 à 3, **caractérisé en ce que** le tronçon proximal (13) fileté intérieurement de l'implant dentaire (6) est constitué par un insert fileté intérieurement (19) rapporté et indexé en rotation dans le logement intérieur de connexion (12).

5. Ensemble (E1) selon la revendication 4, **caractérisé en ce que** la deuxième extrémité (1b) de la pièce intermédiaire de fixation (1) et l'insert fileté intérieurement (19) sont conformés de façon que, lorsque l'insert fileté intérieurement (19) est en appui axialement contre la deuxième extrémité (1b) de la pièce intermédiaire de fixation (1), cet appui s'oppose à un retrait de la deuxième extrémité (1b) de la pièce intermédiaire de fixation (1) hors de la première gorge (17).

6. Ensemble (E1) selon l'une des revendications 4 ou 5, **caractérisé en ce qu'**un déplacement relatif en translation de l'insert fileté intérieurement (19) vers l'extrémité distale (6b) de l'implant dentaire (6) selon le deuxième axe longitudinal (II-II) provoque une expansion radiale de la deuxième extrémité (1b) de la pièce intermédiaire de fixation (1).

7. Ensemble (E1) selon l'une quelconque des revendications 1 à 6, **caractérisé en ce que** :
- il comporte un composant prothétique dentaire (4) comprenant un deuxième passage traversant (22) constitué par des premier (22a) et deuxième (22b) tronçons de passage successifs, ledit premier tronçon de passage (22a) s'étendant depuis une extrémité proximale (21a) du composant prothétique dentaire (4) selon un troisième axe longitudinal (III-III), et ledit deuxième tronçon de passage (22b) prolongeant le premier tronçon de passage (22a),
- le premier tronçon de passage (22a) comporte une deuxième gorge (23) destinée à recevoir par encliquetage les parties distales libres (80a-80c) des ailettes (8a-8c) du premier ensemble (8) d'ailettes longitudinales (8a-8c).

8. Ensemble (E1) selon la revendication 7, **caractérisé en ce que** la première extrémité (1a) de la pièce intermédiaire de fixation (1) et la tête (14) de la vis de fixation (3) sont conformées de façon que, lorsque la tête (14) de la vis de fixation (3) est en appui axialement contre la première extrémité (1a) de la pièce intermédiaire de fixation (1), cet appui s'oppose à un retrait de la première extrémité (1a) de la pièce intermédiaire de fixation (1) hors de la deuxième gorge (23).

9. Ensemble (E1) selon l'une des revendications 7 ou 8, **caractérisé en ce qu'**un déplacement relatif en translation de la tête (14) de la vis de fixation (3) vers l'extrémité proximale (6a) de l'implant dentaire (6) selon le deuxième axe longitudinal (II-II) provoque une expansion radiale de la première extrémité (1a) de la pièce intermédiaire de fixation (1).

10. Ensemble (E1) selon la revendication 9, **caractérisé en ce que** la deuxième gorge (23) et/ou la première extrémité (1a) de la pièce intermédiaire de fixation (1) comportent des surfaces de contact respectives conformées de façon que l'expansion radiale de la première extrémité (1a) de la pièce intermédiaire de fixation (1) induise selon le deuxième axe longitudinal (II-II) un pressage axial de l'extrémité proximale (21a) du composant prothétique dentaire (4) vers l'extrémité distale (6b) de l'implant dentaire (6).

11. Ensemble (E1) selon l'une quelconque des revendications 7 à 10, **caractérisé en ce que** :
- le premier tronçon de passage (22a) du composant prothétique dentaire (4) comporte des dimensions transversales permettant la réception de la première extrémité (1a) de la pièce intermédiaire de fixation (1) et de la tête de vis (14) par pénétration axiale selon le troisième axe longitudinal (III-III) depuis l'extrémité proximale (21a) du composant prothétique dentaire (4),
- le deuxième tronçon de passage (22b) du composant prothétique dentaire (4) comporte des dimensions transversales inférieures à celles du premier tronçon de passage (22a), mais suffisantes pour le passage d'un outil permettant d'entraîner en rotation la vis de fixation (3) selon le troisième axe longitudinal (III-III).

12. Ensemble (E1) selon l'une quelconque des revendications 7 à 11, **caractérisé en ce que** les premier (22a) et deuxième (22b) tronçons de passage forment un angle (A) non nul entre eux.

13. Ensemble (E1) selon l'une quelconque des revendications 7 à 12, **caractérisé en ce que** le composant prothétique dentaire (4) comprend une extrémité proximale (21a) conformée pour venir porter directement en appui contre l'extrémité distale (6b) de l'implant dentaire (6).

14. Ensemble (E1) selon l'une quelconque des revendications 7 à 13, **caractérisé en ce qu'**il comporte des moyens d'indexation en rotation du composant prothétique dentaire (4) et de l'implant dentaire (6) autour du deuxième axe longitudinal (II-II).

15. Ensemble (E1) selon l'une quelconque des revendications 7 à 14, **caractérisé en ce que** le composant prothétique dentaire (4) est une âme de prothèse dentaire (21) comportant une forme extérieure sensiblement en forme de dent, en métal ou en céramique.

16. Ensemble (E1) selon l'une quelconque des revendications 7 à 14, **caractérisé en ce que** le composant prothétique dentaire (4) est un bloc de céramique de forme extérieure sensiblement cylindrique ou prismatique et destiné à être usiné pour obtenir une forme extérieure sensiblement en forme de dent.

17. Ensemble (E1) selon l'une quelconque des revendications 7 à 14, **caractérisé en ce que** le composant prothétique dentaire (4) est un pilier dentaire (26).

18. Ensemble (E1) selon l'une quelconque des revendications 7 à 14, comportant en outre un outil dentaire (5) de type transfert d'empreinte (31), porte-implant (27), corps de scannage intra-oral (30), capuchon de cicatrisation (28) ou capuchon d'obturation (29), ledit outil dentaire (5) s'étendant selon un quatrième axe longitudinal (IV-IV) et comportant un alésage intérieur (32) muni d'une troisième gorge (33) destinée à recevoir par encliquetage les parties distales libres (80a-80c) des ailettes (8a-8c) du premier ensemble (8) d'ailettes longitudinales (8a-8c).

19. Ensemble (E1) selon la revendication 18, **caractérisé en ce qu'**il comporte des moyens d'indexation en rotation de l'outil dentaire (5) ou de l'analogue d'implant dentaire (7) autour du quatrième (IV-IV) ou du cinquième (V-V) axe longitudinal.

## Patentansprüche

1. Baugruppe (E1), umfassend ein Zwischenbefestigungsteil (1), das im Wesentlichen rohrförmig mit einer ersten Durchgangspassage (2) zum Befestigen einer verschraubten Zahnprothesenkomponente (4) oder einem zahnärztlichen Mittel (5) an einem Zahnimplantat (6) ist, wobei sich besagtes Zwischenbefestigungsteil (1) entlang einer ersten Längsachse (I-I) zwischen einem ersten Ende (1a) und einem zweiten Ende (1b) erstreckt, und wobei:
- das erste Ende (1a) eine erste Anordnung (8) von Längsflügeln (8a-8c) aufweist, wobei jeder Längsflügel (8a-8c) ein freies distales Teilstück (80a-80c) aufweist, das radial derart elastisch verschiebbar ist, um mittels Einschnappen in der Zahnprothesenkomponente (4) oder in dem zahnärztlichen Mittel (5) zu koppeln,
- die Baugruppe (E1) ein Zahnimplantat (6) umfasst, das sich entlang einer zweiten Längsachse (II-II) zwischen einem proximalen Ende (6a) und einem distalen Ende (6b) mit einem inneren Verbindungslager (12) erstreckt, das sich ausgehend von dem distalen Ende (6b) in Richtung des proximalen Endes (6a) erstreckt und einen proximalen Abschnitt (13) mit Innengewinde umfasst,
- die Baugruppe (E1) eine Befestigungsschraube (3) mit einem Schraubenkopf (14) umfasst, von welchem sich ein Schraubenschaft (15) erstreckt, der mit einem Gewindeabschnitt (16) versehen ist, der vorgesehen ist, durch Verschraubung im proximalen Abschnitt (13) mit Innengewinde des Zahnimplantats (6) aufgenommen zu werden,
**dadurch gekennzeichnet, dass**:
- das zweite Ende (1b) eine zweite Anordnung (9) von Längsflügeln (9a-9c) aufweist, wobei jeder Längsflügel (9a-9c) ein freies distales Teilstück (90a-90c) aufweist, das radial derart elastisch verschiebbar ist, um mittels Einschnappen in dem Zahnimplantat (6) zu koppeln,
- die erste (8) und die zweite (9) Anordnung von Längsflügeln (8a-8c; 9a-9c) durch eine Mehrzahl Längsschlitze (F1-F6) definiert sind, die sich nur über ein Teil der Länge des Zwischenbefestigungsteils (1) erstrecken und alternierend vom ersten Ende (1a) und vom zweiten Ende (1b) Ausgang nehmen, wobei sich besagte Schlitze (F1-F6) entlang des gleichen axialen Zwischenabschnitts (10) des Zwischenbefestigungsteils (1) erstrecken, sodass die Längsflügel (8a-8c; 9a-9c) der ersten (8) und zweiten (9) Anordnung entlang ihrer Länge eine Überlappung darstellen,
- das innere Verbindungslager (12) eine erste Nut (17) aufweist, die zwischen dem proximalen Abschnitt (13) mit Innengewinde und dem distalen Ende (6b) des Zahnimplantats (6) ausgebildet ist und vorgesehen ist, durch Einschnappen die freien distalen Teilstücke (90a-90c) der Flügel (9a-9c) der zweiten Anordnung (9) der Längsflügel (9a-9c) aufzunehmen.

2. Baugruppe (E1) nach Anspruch 1, **dadurch gekennzeichnet, dass** das Einschnappen der freien distalen Teilstücke (90a-90c) der Flügel (9a-9c) der zweiten Anordnung (9) der Längsflügel (9a-9c) irreversibel ist.

3. Baugruppe (E1) nach Anspruch 1, **dadurch gekennzeichnet, dass** das Einschnappen der freien distalen Teilstücke (90a-90c) der Flügel (9a-9c) der zweiten Anordnung (9) der Längsflügel (9a-9c) reversibel ist.

4. Baugruppe (E1) nach einem der Ansprüche 1 bis 3, **dadurch gekennzeichnet, dass** der proximale Abschnitt (13) mit Innengewinde des Zahnimplantats (6) aus einem Innengewindeeinsatz (19) aufgebaut ist, der im inneren Verbindungslager (12) angebracht und zur Rotation indexiert ist.

5. Baugruppe (E1) nach Anspruch 4, **dadurch gekennzeichnet, dass** das zweite Ende (1b) des Zwischenbefestigungsteils (1) und der Innengewindeeinsatz (19) derart angepasst sind, dass wenn der Innengewindeeinsatz (19) axial gegen das zweite Ende (1b) des Zwischenbefestigungsteils (1) anliegt, dieses Anliegen einem Schwinden des zweiten Endes (1b) des Zwischenbefestigungsteils (1) aus der ersten Nut (17) entgegenwirkt.

6. Baugruppe (E1) nach einem der Ansprüche 4 oder 5, **dadurch gekennzeichnet, dass** eine relative Translationsverschiebung des Innengewindeeinsatzes (19) zum distalen Ende (6b) des Zahnimplantats (6) entlang der zweiten Längsachse (II-II) eine radiale Expansion des zweiten Endes (1b) des Zwischenbefestigungsteils (1) bewirkt.

7. Baugruppe (E1) nach einem der Ansprüche 1 bis 6, **dadurch gekennzeichnet, dass**:
- sie eine Zahnprothesenkomponente (4) aufweist, die eine zweite Durchgangspassage (22) umfasst, der mit ersten (22a) und zweiten (22b) aufeinanderfolgenden Passagenabschnitten aufgebaut ist, wobei sich besagter erster Passagenabschnitt (22a) von einem proximalen Ende (21a) der Zahnprothesenkomponente (4) entlang einer dritten Längsachse (III-III) erstreckt und besagter zweiter Passagenabschnitt (22b) den ersten Passagenabschnitt (22a) verlängert,
- der erste Passagenabschnitt (22a) eine zweite Nut (23) aufweist, die vorgesehen ist, durch Einschnappen die freien distalen Teilstücke (80a-80c) der Flügel (8a-8c) der ersten Anordnung (8) der Längsflügel (8a-8c) aufzunehmen.

8. Baugruppe (E1) nach Anspruch 7, **dadurch gekennzeichnet, dass** das erste Ende (1a) des Zwischenbefestigungsteils (1) und der Kopf (14) der Befestigungsschraube (3) derart angepasst sind, dass, wenn der Kopf (14) der Befestigungsschraube (3) axial gegen das erste Ende (1a) des Zwischenbefestigungsteils (1) anliegt, dieses Anliegen einem Schwinden des ersten Endes (1a) des Zwischenbefestigungsteils (1) aus der zweiten Nut (23) entgegenwirkt.

9. Baugruppe (E1) nach einem der Ansprüche 7 oder 8, **dadurch gekennzeichnet, dass** eine relative Translationsverschiebung des Kopfes (14) der Befestigungsschraube (3) zum proximalen Ende (6a) des Zahnimplantats (6) entlang der zweiten Längsachse (II-II) eine radiale Expansion des ersten Endes (1a) des Zwischenbefestigungsteils (1) bewirkt.

10. Baugruppe (E1) nach Anspruch 9, **dadurch gekennzeichnet, dass** die zweite Nut (23) und/oder das erste Ende (1a) des Zwischenbefestigungsteils (1) Kontaktflächen aufweisen, die entsprechend derart angepasst sind, dass die radiale Expansion des ersten Endes (1a) des Zwischenbefestigungsteils (1) entlang der zweiten Längsachse (II-II) ein axiales Drücken des proximalen Endes (21a) der Zahnprothesenkomponente (4) zum distalen Ende (6b) des Zahnimplantats (6) induziert.

11. Baugruppe (E1) nach einem der Ansprüche 7 bis 10, **dadurch gekennzeichnet, dass**:
- der erste Passagenabschnitt (22a) der Zahnprothesenkomponente (4) Querdimensionen aufweist, die das Empfangen des ersten Endes (1a) des Zwischenbefestigungsteils (1) und des Schraubenkopfes (14) durch axiale Penetration entlang der dritten Längsachse (III-III) ausgehend vom proximalen Ende (21a) der Zahnprothesenkomponente (4) erlauben,
- der zweite Passagenabschnitt (22b) der Zahnprothesenkomponente (4) Querdimensionen aufweist, die kleiner sind als die des ersten Passagenabschnitts (22a), aber ausreichend für die Passage eines Werkzeugs, das es erlaubt, die Befestigungsschraube (3) entlang der dritten Längsachse (III-III) rotierend anzuziehen.

12. Baugruppe (E1) nach einem der Ansprüche 7 bis 11, **dadurch gekennzeichnet, dass** der erste (22a) und der zweite (22b) Passagenabschnitt einen Winkel (A) zwischen ihnen formen, der nicht Null ist.

13. Baugruppe (E1) nach einem der Ansprüche 7 bis 12, **dadurch gekennzeichnet, dass** die Zahnprothesenkomponente (4) ein proximales Ende (21a) umfasst, das so angepasst ist, dass es direkt gegen das distale Ende (6b) des Zahnimplantats (6) zur Anlage kommt.

14. Baugruppe (E1) nach einem der Ansprüche 7 bis 13, **dadurch gekennzeichnet, dass** sie zur Rotation um die zweite Längsachse (II-II) indexierte Mittel der Zahnprothesenkomponente (4) und des Zahnimplantats (6) aufweist.

15. Baugruppe (E1) nach einem der Ansprüche 7 bis 14, **dadurch gekennzeichnet, dass** die Zahnprothesenkomponente (4) ein Zahnprothesenkern (21) ist, der eine äußere Form im Wesentlichen in Form eines Zahns, aus Metall oder aus Keramik, aufweist.

16. Baugruppe (E1) nach einem der Ansprüche 7 bis 14, **dadurch gekennzeichnet, dass** die Zahnprothesenkomponente (4) ein Keramikblock mit einer im Wesentlichen zylindrischen oder prismatischen äußeren Form ist und dazu vorgesehen ist, gefertigt zu werden, um eine äußere Form im Wesentlichen in Form eines Zahns zu erhalten.

17. Baugruppe (E1) nach einem der Ansprüche 7 bis 14, **dadurch gekennzeichnet, dass** die Zahnprothesenkomponente (4) eine zahnärztliche Stütze (26) ist.

18. Baugruppe (E1) nach einem der Ansprüche 7 bis 14, ferner aufweisend ein zahnärztliches Mittel (5) vom Typ eines Abformpfostens (31), eines Implantatträger (27), eines intraoralen Scankörpers (30), einer Einheilkappe (28) oder Verschlusskappe (29), wobei sich besagtes zahnärztliches Mittel (5) entlang einer vierten Längsachse (IV-IV) erstreckt und eine innere Bohrung (32) aufweist, die mit einer dritten Nut (33) versehen ist, die vorgesehen ist, die freien distalen Teilstücke (80a-80c) der Flügel (8a-8c) der ersten Anordnung (8) der Längsflügel (8a-8c) durch Einschnappen aufzunehmen.

19. Baugruppe (E1) nach Anspruch 18, **dadurch gekennzeichnet, dass** sie zur Rotation um die vierte (IV-IV) oder die fünfte (V-V) Längsachse indexierte Mittel des zahnärztlichen Mittels (5) oder des Zahnimplantatanalogs (7) aufweist.

## Claims

1. Assembly (E1) comprising a substantially tubular intermediate attachment part (1) with a first through-passage (2) for attaching a screw-through dental prosthesis component (4) or a dental tool (5) to a dental implant (6), said intermediate attachment part (1) extending along a first longitudinal axis (I-I) between a first end (1a) and a second end (1b), and in which:
- the first end (1a) comprises a first set (8) of longitudinal fins (8a-8c), each longitudinal fin (8a-8c) comprising a free distal portion (80a-80c) that can move radially in an elastic manner in order to engage by snap-fitting in the dental prosthetic component (4) or in the dental tool (5),
- the assembly (E1) comprises a dental implant (6) extending along a second longitudinal axis (II-II) between a proximal end (6a) and a distal end (6b), with an interior connection housing (12) extending from the distal end (6b) and toward the proximal end (6a) and comprising an internally threaded proximal segment (13),
- the assembly (E1) comprises an attachment screw (3) comprising a screw head (14) from which there extends a screw shank (15) equipped with a threaded segment (16) intended to be received by screw-fitting in the internally threaded proximal segment (13) of the dental implant (6),
**characterized in that**:
- the second end (1b) comprises a second set (9) of longitudinal fins (9a-9c), each longitudinal fin (9a-9c) comprising a free distal portion (90a-90c) that can move radially in an elastic manner in order to engage by snap-fitting in the dental implant (6),
- the first (8) and second (9) sets of longitudinal fins (8a-8c; 9a-9c) are defined by a plurality of longitudinal slots (F1-F6) extending over just a portion of the length of the intermediate attachment part (1) and originating alternately from the first end (1a) and from the second end (1b), said slots (F1-F6) extending along the one same intermediate axial segment (10) of the intermediate attachment part (1) such that the longitudinal fins (8a-8c; 9a-9c) of the first (8) and second (9) sets exhibit an overlap along their length,
- the internal connection housing (12) comprises a first groove (17), formed between the internally threaded proximal segment (13) and the distal end (6b) of the dental implant (6) and intended to accept by snap-fitting the free distal portions (90a-90c) of the fins (9a-9c) of the second set (9) of longitudinal fins (9a-9c).

2. Assembly (E1) according to Claim 1, **characterized in that** the snap-fitting of the free distal portions (90a-90c) of the fins (9a-9c) of the second set (9) of longitudinal fins (9a-9c) is irreversible.

3. Assembly (E1) according to Claim 1, **characterized in that** the snap-fitting of the free distal portions (90a-90c) of the fins (9a-9c) of the second set (9) of longitudinal fins (9a-9c) is reversible.

4. Assembly (E1) according to any one of Claims 1 to 3, **characterized in that** the internally threaded proximal segment (13) of the dental implant (6) consists of an internally threaded insert (19) which is attached into and indexed in terms of rotation in the interior connection housing (12).

5. Assembly (E1) according to Claim 4, **characterized in that** the second end (1b) of the intermediate attachment part (1) and the internally threaded insert (19) are shaped in such a way that, when the internally threaded insert (19) is axially in abutment against the second end (1b) of the intermediate attachment part (1), this abutment opposes withdrawal of the second end (1b) of the intermediate attachment part (1) from the first groove (17).

6. Assembly (E1) according to one of Claims 4 and 5, **characterized in that** a relative translational movement of the internally threaded insert (19) toward the distal end (6b) of the dental implant (6) along the second longitudinal axis (II-II) causes radial expansion of the second end (1b) of the intermediate attachment part (1).

7. Assembly (E1) according to any one of Claims 1 to 6, **characterized in that**:
- it comprises a dental prosthetic component (4) comprising a second through-passage (22) made up of successive first (22a) and second (22b) passage segments, said first passage segment (22a) extending from a proximal end (21a) of the dental prosthetic component (4) along a third longitudinal axis (III-III), and said second passage segment (22b) prolonging the first passage segment (22a),
- the first passage segment (22a) comprises a second groove (23) intended to receive by snap-fitting the free distal parts (80a-80c) of the fins (8a-8c) of the first set (8) of longitudinal fins (8a-8c).

8. Assembly (E1) according to Claim 7, **characterized in that** the first end (1a) of the intermediate attachment part (1) and the head (14) of the attachment screw (3) are shaped in such a way that, when the head (14) of the attachment screw (3) is axially in abutment against the first end (1a) of the intermediate attachment part (1), this abutment opposes withdrawal of the first end (1a) of the intermediate attachment part (1) from the second groove (23).

9. Assembly (E1) according to one of Claims 7 and 8, **characterized in that** a relative translational movement of the head (14) of the attachment screw (3) toward the proximal end (6a) of the dental implant (6) along the second longitudinal axis (II-II) causes radial expansion of the first end (1a) of the intermediate attachment part (1).

10. Assembly (E1) according to Claim 9, **characterized in that** the second groove (23) and/or the first end (1a) of the intermediate attachment part (1) have respective contact surfaces which are shaped in such a way that radial expansion of the first end (1a) of the intermediate attachment part (1) causes the proximal end (21a) of the dental prosthetic component (4) to press axially, along the second longitudinal axis (II-II), toward the distal end (6b) of the dental implant (6).

11. Assembly (E1) according to any one of Claims 7 to 10, **characterized in that**:
- the first passage segment (22a) of the dental prosthetic component (4) has transverse dimensions that allow it to accept the first end (1a) of the intermediate attachment part (1) and the screw head (14) by axial penetration along the third longitudinal axis (III-III) from the proximal end (21a) of the dental prosthetic component (4),
- the second passage segment (22b) of the dental prosthetic component (4) has transverse dimensions smaller than those of the first passage segment (22a) but large enough for the passage of a tool used to turn the attachment screw (3) along the third longitudinal axis (III-III).

12. Assembly (E1) according to any one of Claims 7 to 11, **characterized in that** the first (22a) and second (22b) passage segments form a non-zero angle (A) between them.

13. Assembly (E1) according to any one of Claims 7 to 12, **characterized in that** the dental prosthetic component (4) comprises a proximal end (21a) configured to come directly into abutment against the distal end (6b) of the dental implant (6).

14. Assembly (E1) according to any one of Claims 7 to 13, **characterized in that** it comprises means for indexing the rotation of the dental prosthetic component (4) and of the dental implant (6) about the second longitudinal axis (II-II).

15. Assembly (E1) according to any one of Claims 7 to 14, **characterized in that** the dental prosthetic component (4) is a dental prosthesis abutment (21) having an exterior shape substantially in the shape of a tooth, made of metal or made of ceramic.

16. Assembly (E1) according to any one of Claims 7 to 14, **characterized in that** the dental prosthetic component (4) is a block of ceramic of substantially cylindrical or prismatic exterior shape and intended to be machined in order to obtain a substantially tooth-shaped exterior shape.

17. Assembly (E1) according to any one of Claims 7 to 14, **characterized in that** the dental prosthetic component (4) is a dental post (26).

18. Assembly (E1) according to any one of Claims 7 to 14, further comprising a dental tool (5) of the impression-transfer (31), implant-bearing (27), intra-oral scanning body (30), healing cap (28) or closure cap (29) type, said dental tool (5) extending along a fourth longitudinal axis (IV-IV) and comprising an interior bore (32) equipped with a third groove (33) intended to accept, by snap-fitting, the free distal parts (80a-80c) of the fins (8a-8c) of the first set (8) of longitudinal fins (8a-8c).

19. Assembly (E1) according to Claim 18, **characterized in that** it comprises means for indexing the rotation of the dental tool (5) or of the dental implant analogue (7) about the fourth (IV-IV) or the fifth (V-V) longitudinal axis.
